# EUROPÄISCHE PATENTSCHRIFT

(11) **EP 3 678 793 B1**
(45) Veröffentlichungstag und Bekanntmachung des Hinweises auf die Patenterteilung: **03.07.2024**
(21) Anmeldenummer: 18749359.8
(22) Anmeldetag: 01.08.2018
(51) Int. Cl.: B08B 9/28, B05B 12/08, B05B 1/20, G01P 13/00

(54) **VORRICHTUNG ZUM REINIGEN VON FLASCHEN**
DEVICE FOR CLEANING BOTTLES
DISPOSITIF DE NETTOYAGE DE BOUTEILLES

(30) Priorität: 09.09.2017 DE 102017008490
(43) Veröffentlichungstag der Anmeldung: 15.07.2020
(73) Patentinhaber: Krones AG, 93073 Neutraubling (DE)
(72) Erfinder: ZIEGLER, Manfred, 93073 Neutraubling (DE); WITTMANN, Norbert, 93073 Neutraubling (DE)
(74) Vertreter: Grünecker Patent- und Rechtsanwälte PartG mbB
(86) Internationale Anmeldenummer: PCT/EP2018/070860
(87) Internationale Veröffentlichungsnummer: WO 2019/048142

(56) Entgegenhaltungen:
- EP-A1- 0 920 358
- EP-A2- 1 728 565
- WO-A2-2019/002047
- DE-A1- 4 343 363
- DE-C- 516 428
- JP-A- 2005 296 842
- US-A1- 2009 114 675

## Beschreibung

Die Erfindung betrifft eine Vorrichtung zum Reinigen bzw. Waschen von Flaschen gemäß dem Oberbegriff des Anspruchs 1 und wie bekannt aus DE 43 43 363 A1. Derartige Vorrichtungen werden auch Flaschenwaschmaschinen genannt. In diesen Waschmaschinen werden die Flaschen in einem heißen Reinigungsmittel, wie etwa einer heißen Lauge gereinigt. Zu diesem Zweck sind bevorzugt mehrere Tauchbäder vorgesehen. Zur Entfernung der Lauge nach dem Passieren dieser Tauchbäder werden die Flaschen anschließend mit kaltem, klarem Wasser außen und innen abgesprüht bzw. ausgespritzt. Entsprechende Maschinen werden von der Anmelderin u.a. unter der Bezeichnung "Lavatec" weltweit vertrieben.

Um die Flaschen von einer Eingangsstation zu einem Reinigungsbecken und weiter zu den in Transportrichtung der Flaschen nachfolgenden Spritzdüsen zu führen, ist ein Förderer vorgesehen.

Bei der Reinigung von Flaschen hat sich gezeigt, dass gelegentlich bei einigen Flaschen die Spülung mit kaltem Wasser nicht zufriedenstellend ist, so dass Reinigungsmittelreste in oder an der Flasche verbleiben können.

Um derartige Betriebszustände erkennen zu können, wurde durch DE 10 2005 018 382 A1 bereits ein System vorgeschlagen, das eine Temperaturüberprüfung der Flaschen durchführt, um unzulässige Betriebszustände erkennen zu können. Es hat sich allerdings gezeigt, dass die Erkennungssicherheit verbesserungswürdig ist.

Aus EP 0 290 358 A1 ist zudem ein Rinser für Flaschen bekannt, bei dem Spritzstrahlen unmittelbar nach deren Austritt aus Spritzdüsen mittels wenigstens einer Lichtschranke oder unmittelbar vor dem Austritt mittels eines in der jeweiligen Zuleitung beweglich angeordneten Drosselkörpers überwacht werden.

Aufgabe der vorliegenden Erfindung ist es daher, eine Vorrichtung und ein Verfahren zu schaffen, mit dem die Qualität der Reinigung überwacht und insbesondere eine zufriedenstellende Entfernung des Reinigungsmittels sichergestellt werden kann.

Die Aufgabe wird gelöst durch eine Vorrichtung nach Anspruch 1. Bevorzugte Ausführungsformen sind in den Unteransprüchen offenbart.

Die Waschmaschine kann einen Förderer umfassen, mit dem die Flaschen durch Reinigungsbecken mit Waschlauge oder anderen Chemikalien und zu den nachfolgenden Spritzdüsen gefördert werden, wo die Flaschen mit klarem Wasser gespült werden. Üblicherweise werden hierzu selbstreinigende Spritzdüsen verwendet, deren Düsenbohrungen abwechselnd in beide Richtungen vom Wasser durchströmt werden.

Derartige Spritzsysteme sind dem Fachmann allgemein bekannt, siehe DE 2402630, EP 0411377, DE 4330335, EP 1728565, DE 4109102, DE 4106765 und viele weitere. WO 2019/002047 A2 fällt unter Art. 54(3) EPC und offenbart eine andere Vorrichtung zum Reinigen von Flaschen.

Die drehenden Spritzdüsen können ortsfest am Transportpfad der Flaschen angeordnet sein oder ggf. auf einem Spritzwagen, der der kontinuierlichen Flaschenbewegung zumindest abschnittsweise synchronisiert folgt.

Die Waschmaschine kann zur Erzielung hoher Leistungen mehrere Spuren aufweisen, in denen die Flaschen nebeneinander gefördert werden. Dementsprechend weist der Transporteur beispielsweise mit einer Vielzahl von Zellen ausgestattete Korbreihen zur Aufnahme von Flaschen auf, die durch seitliche Ketten längs zur Förderrichtung verbunden sind und mit geeigneten Antrieben durch den Innenraum der Maschine gezogen werden können. Entsprechend sind Spritzdüsenreihen vorgesehen, die ebenfalls quer zur Transportrichtung ausgerichtet sind, so wie das die vorhergehend genannten Dokumente bereits offenbaren.

Im Bereich der Spritzdüsen kann wenigstens eine Erfassungseinheit vorgesehen sein, die überprüft, ob das Entfernen des Reinigungsmittels tatsächlich erfolgt ist. Bevorzugt ist die Erfassungseinheit so ausgebildet, dass idealerweise die Funktion jeder einzelnen Spritzdüse im Betrieb geprüft werden kann. Damit sollen frühzeitig defekte oder verstopfte Spritzdüsen erkannt werden, die nicht genügend oder gar kein Spülwasser auf vorbeigeführte Flaschen abgeben.

Hierzu kann den Spritzdüsen mit Abstand gegenüberliegend eine Reihe von Sensoren zugeordnet werden. Durch Erfassung des Spritzstrahls über den Flaschenzellen einer Korbreihe durch die genannten Sensoren kann die Funktion der Spritzdüsen zuverlässig überwacht werden.

Wenn dann während dem Betrieb bestimmte Förderplätze von Flaschen freigehalten werden, indem beispielsweise durch das Programm der Maschinensteuerung am Flascheneinschub eine komplette Korbreihe nicht mit Flaschen beschickt wird, oder in der Flaschenaufgabestation nur bestimmte Flaschenzellen einer Korbreihe nicht mit Flaschen beschickt werden, kann beim Passieren der entsprechenden Spritzdüsen bei ordnungsgemäßer Funktion der zugeordnete Sensor durch den Sprühstrahl beaufschlagt werden, was problemlos erfass- und auswertbar ist.

Diese Methode ist gut geeignet, um in bestimmten Intervallen die Spritzdüsen zu testen. Es ist nicht unbedingt erforderlich, immer gleich eine gesamte Spritzdüsenreihe über die gesamte Breite gleichzeitig zu überprüfen, um Produktionsstörungen zu vermeiden. Vielmehr ist es ausreichend und technisch möglich, über mehrere in Transportrichtung aufeinander folgende Korbreihen einzelne, zueinander seitlich versetzte Zellen in den Korbreihen nicht mit Flaschen zu besetzen, so dass nach dem Passieren mehrerer Korbreihen eine Spritzdüsenreihe über die gesamte Maschinenbreite hinweg vollständig überprüfbar ist. In Verbindung mit der Maschinensteuerung, deren Schieberegisterfunktion und einem Drehimpulsgeber am Maschinenantrieb können die leeren Zellen bis zum Eintreffen an den zugeordneten Spritzdüsen mitverfolgt und dann deren Sprühfunktion durch den jeweils entsprechenden Sensor überprüft werden.

Besonders vorteilhaft ist jedoch eine Ausprägung der Erfassungseinheit zur Überprüfung der Spritzdüsen, die im laufenden Betrieb bei jedem Arbeitstakt einer Sprühdüse deren korrekte Funktion kontrolliert. Dies kann bevorzugt durch eine Überwachung der Wasserströmung im Zulauf zu einer Düse oder in der Düse selbst erfolgen. Eine einfache Möglichkeit ist ein beweglicher Schwebe- oder Drosselkörper in der Zulaufleitung bzw. der Düse selbst, der in Abhängigkeit der Wasserströmung seine Lage verändert, was durch Sensoren detektiert und ausgewertet werden kann.

Da die Zuleitungen der Spritzdüsen in einer Flaschenwaschmaschine in der Regel in einer vertikalen Ausrichtung angebracht sind, ist in diesem Bereich eine besonders günstige Realisierung möglich. Jeder Spritzdüsenposition kann ein derartiger Schwebe- oder Drosselkörper mit einem Sensor zur Lageerkennung zugeordnet werden.

Eine Ausführungsform der Vorrichtung soll an Hand der beiliegenden Figuren erläutert werden. Dabei zeigt:
- Figur 1: eine schematische Schnittansicht einer Waschmaschine,
- Figur 2: eine Ausführungsform einer Erfassungseinheit zum Überwachen von Spritzdüsen in einer Waschmaschine,
- Figur 3: eine Ausführungsform einer im Zulauf zu einer Düse angeordneten Erfassungseinheit zum Überwachen von Spritzdüsen, und
- Figur 4: eine Draufsicht auf zwei Spritzdüsen gemäß Figur 3.

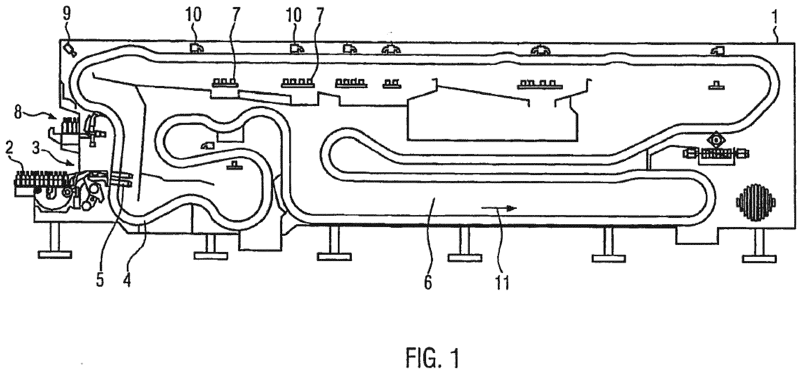

In Figur 1 ist eine schematische Schnittansicht längs einer Vorrichtung 1 zum Reinigen von Flaschen 2 gezeigt. Die Flaschen 2 werden an einem Eingang 3 in die Vorrichtung 1 aufgenommen. Die Vorrichtung 1 weist ein im Wesentlichen geschlossenes Gehäuse auf. In der Vorrichtung 1 ist ein Förderer 4 vorgesehen, an dem Korbreihen mit Zellen 5 angebracht sind, in die die Flaschen 2 eingesetzt werden können. In einer Reihe quer zur Förderrichtung sind mehrere Zellen nebeneinander angeordnet, so dass immer mehrere Flaschen 2 parallel nebeneinander mit dem Förderer 4 in Förderrichtung 11 gefördert werden können.

Mit dem Förderer 4 werden die Flaschen 2 durch verschiedene Behandlungsstationen hindurchgeführt. Dies kann beispielsweise eine Entleerung, eine Vorweiche, eine Abspritzstation, ein Laugenbad 6, eine Abschwallstation, Trockenstufen, etc. umfassen. Im Laugenbad 6 findet eine Tauchbehandlung der Flaschen statt. Es wird von den Flaschen mit nach oben gerichteter offener Mündung durchfahren, wodurch diese mit Lauge komplett volllaufen.

Weiterhin sind Spritzdüsen 7 vorgesehen, mit denen die Flaschen innen und außen mit klarem kaltem Wasser abgespritzt bzw. ausgespritzt werden können, um so Laugenreste oder Reste von sonstigen Reinigungsmitteln zu entfernen. Wie in Figur 1 zu erkennen, sind die Spritzdüsen 7 im Wesentlichen am Ende der eine geschlossene Umlaufbahn bildenden Förderstrecke angeordnet.

In dem Laugenbad 6 befindet sich heiße Lauge, in die die Flaschen 2 eingetaucht werden, so dass die Lauge die Flaschen 2 auf der Innen- und Außenseite reinigen kann. Durch den Kontakt mit der heißen Lauge werden die Flaschen 2 erwärmt.

Durch das Absprühen, bzw. Ausspritzen der Flaschen 2 mit kaltem Wasser werden Reinigungsmittelreste entfernt. Zusätzlich wird dabei auch die Temperatur der Flaschen wieder abgesenkt. Für die verschiedenen parallelen Spuren der Flaschen 2 sind jeweils mehrere Spritzdüsen 7 in einer Reihe vorgesehen, die sich quer zur Förderrichtung 11 erstreckt.

Gegenüber von den Spritzdüsen 7 befinden sich weiterhin Schwallvorrichtungen 10, die Flüssigkeitsreste von einem eventuellen Hohlboden der Flaschen 2 entfernen können. Es können auch noch Überwachungseinrichtungen in Form von Kameras 9 für den weitgehend geschlossenen Innenraum der Maschine vorgesehen sein.

In Figur 1 ist der Fall einer Einendausführung gezeigt, bei dem Flascheneingabe 3 und Flaschenausgabe 8 auf der gleichen Seite der Vorrichtung ist. Anstelle einer Einendausführung kann jedoch auch ein Zweiender vorgesehen sein, bei dem die Flaschenausgabe 8 an der gegenüberliegenden Seite der Flascheneingabe 3 angeordnet ist.

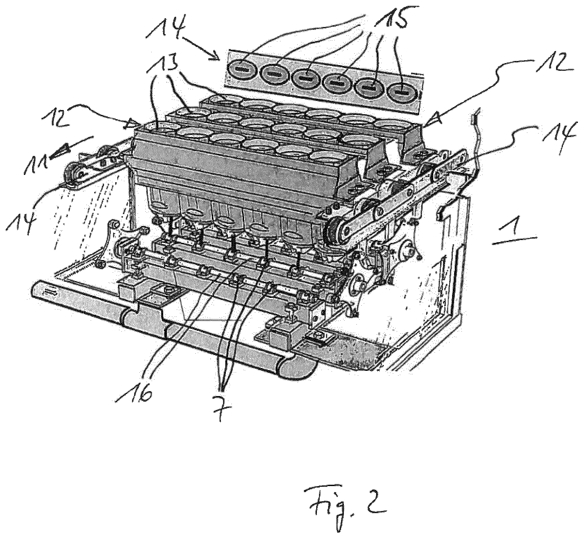

In Fig 2 ist ein Teilschnitt der Vorrichtung 1 in perspektivischer Darstellung gezeigt, aus dem die Einrichtung zur Überwachung der Funktion der Düsen 7 erkennbar ist. Es sind mehrere parallele Korbreihen 12 mit Zellen 13 zur Aufnahme von Flaschen abgebildet, die an ihren gegenüberliegenden Enden jeweils mit einer längs zur Transportrichtung 11 verlaufenden Rollenkette 14 verbunden sind. Unter den Korbreihen sind mit Zwischenabstand parallel angeordnete drehende Spritzrohre 16 mit in Richtung nach oben zu den Zellen 13 gerichteten Düsen 7 ortsfest angeordnet. Die Spritzrohre sind wie die Korbreihen 12 mit ihrer Längserstreckung quer zur Transportrichtung 11 verlaufend ausgerichtet. Die Düsen 7 und Zellen 13 sind einander abschnittsweise paarweise zugeordnet, um eine in einer Zelle kopfüber stehende Flasche durch die Mündung mit Wasser ausspülen zu können.

Oberhalb der Bewegungsbahn der Korbreihen 12 ist wenigstens eine Sensorleiste 14 ortsfest über einem Spritzrohr so befestigt, dass immer ein Sensor 15 der Sensorleiste in Spritzrichtung über einer Düse 7 ausgerichtet dieser zugeordnet ist, d.h. die Ausrichtung der wenigstens einen Sensorleiste 14 ist parallel zum Spritzrohr gewählt. Im Idealfall ist jedem Spritzrohr 16 eine eigene Sensorleiste 14 zugeordnet, so dass alle Düsen 7 im Betrieb kontrollierbar sind. Die Sensoren können Druckaufnehmer, Lichtschranken und dgl. sein. Wenn nun die Zellen beispielsweise periodisch nicht mit Flaschen bestückt werden, kann das Vorhandensein eines Spritzstrahles durch den zugeordneten Sensor 15 geprüft werden. Kann im relevanten Zeitintervall kein ausreichender Spritzstrahl festgestellt werden, wird ein Signal erzeugt, um eine ggf. defekte Düse lokalisiert anzuzeigen. Die genannten Sensorleisten haben den Vorteil, dass die Sensoren durch entsprechende Wartungsöffnungen mit Schließklappen am Maschinengehäuse jederzeit schnell entnommen werden können und jeder Sensor auf der Leiste passend zu den Spritzdüsen vorpositionierbar ist.

Unter dem Begriff Zellen sollen allgemein alle für Flaschen geeigneten Halteeinrichtungen, wie zum Beispiel Greifer o. dgl. verstanden werden, die zum Transport von Flaschen innerhalb einer gattungsgemäßen Reinigungsvorrichtung in Betracht kommen.

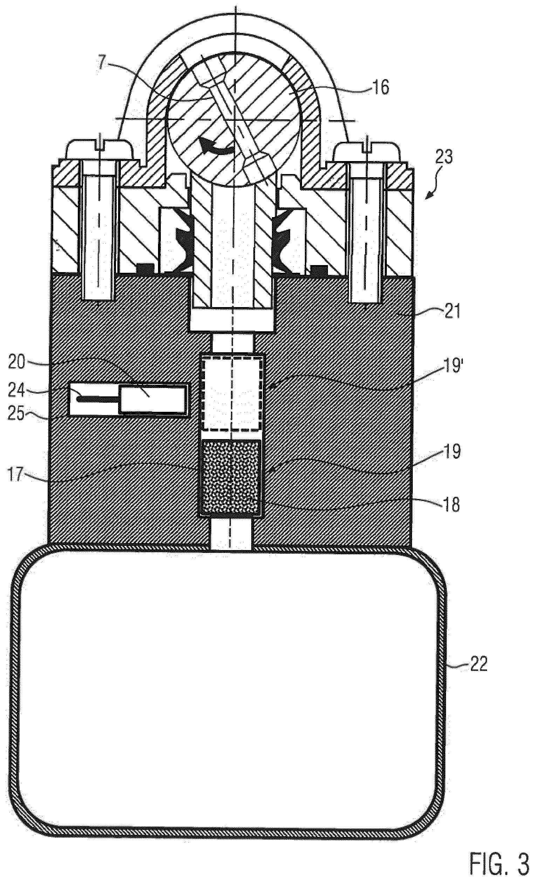

Die Figur 3 zeigt eine besonders vorteilhafte Ausprägung der Erfassungseinheit zur Überprüfung der Spritzdüsen, die vorzugsweise im laufenden Betrieb bei jedem Arbeitstakt einer Sprühdüse deren korrekte Funktion kontrolliert.

Demnach erfolgt eine Überwachung der Wasserströmung im Zulauf 17 zu einer Düse 7 oder in der Düse 7 selbst. Eine einfache Möglichkeit ist ein beweglicher Schwebekörper oder Drosselkörper 18 in der Zulaufleitung 17 bzw. der Düse 7 selbst, der in Abhängigkeit der Wasserströmung seine Lage 19, 19' verändert, was durch einen Sensor 20 detektiert und ausgewertet werden kann.

Da die Zuleitungen 17 der Spritzdüsen 7 in einer Flaschenwaschmaschine in der Regel in einer vertikalen Ausrichtung angebracht sind, ist in diesem Bereich eine besonders günstige Realisierung möglich. Jeder Spritzdüsenposition kann ein derartiger Schwebe- oder Drosselkörper 18 mit einem Sensor 20 zur Lageerkennung zugeordnet werden.

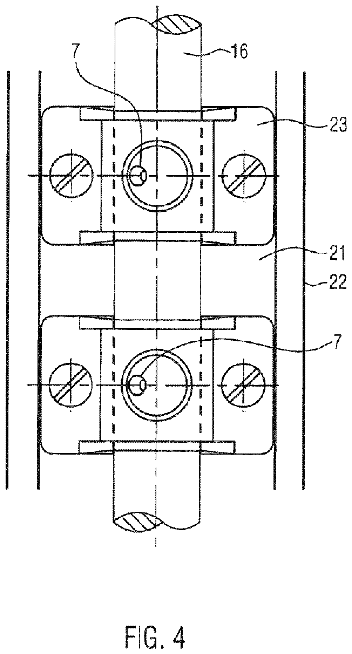

In den Figuren 3 und 4 sind die Düsen 7 jeweils in geschlossener Stellung dargestellt. Die Düsen 7 werden durch Drehung des Spritzrohrs 16 geöffnet, was in der Figur 3 durch einen gekrümmten Pfeil gekennzeichnet ist.

Die Drosselkörper 18 und die Sensoren 20 können beispielsweise in einem Zwischenstück 21 zwischen einer Zulaufleitung 22 und einer Düsenfassung 23 angeordnet werden. Für die Sensoren 20 und zugehörige Leitungen 24 können geeignete Kanäle 25 im Zwischenstück 21 ausgebildet sein. Anstelle des separaten Zwischenstücks 21 könnten diese Bauteile jedoch auch in die Düsenfassung 23 integriert sein.

## Patentansprüche

1. Vorrichtung (1) zum Reinigen von Flaschen (2) mit einem im Wesentlichen geschlossenen Gehäuse mit mindestens einem Reinigungsbecken, in dem Flaschen in heißem Reinigungsmittel durch eine Tauchbehandlung gereinigt werden können, und Spritzdüsen (7), mit denen das Reinigungsmittel mit kälterem Wasser abgesprüht werden kann, **gekennzeichnet durch** mindestens eine Einheit zum Überprüfen der Funktion von wenigstens einzelnen, vorzugsweise allen Spritzdüsen, wobei die Einheit geeignete Sensoren (15) aufweist, die bei Betätigung einer Spritzdüse einen Fluidstrom in Fließrichtung hinter der Austrittsöffnung einer Spritzdüse erfassen können, wobei die Vorrichtung eine Transporteinrichtung für Flaschen aufweist und die Sensoren der Einheit im Bereich der Spritzdüsen angeordnet sind, wobei die Transporteinrichtung Zellen (13) oder dgl. Haltemittel zur Aufnahme einzelner Flaschen aufweist, wobei die Flaschen im Bereich der Spritzdüsen in einer Überkopfposition in den Zellen angeordnet sind und im Transportpfad einer Flasche wenigstens ein Sensor oberhalb einer zugeordneten Zelle so positioniert ist, dass er einen Spritzstrahl erfassen kann, und wobei die Sensoren der Einheit oberhalb der Transporteinrichtung auf einer gemeinsamen Leiste (14) angeordnet sind.

2. Vorrichtung nach Anspruch 1, wobei ferner Sensoren (20) in den Spritzdüsen (7) oder in Fließrichtung davor angeordnet sind.

3. Vorrichtung nach Anspruch 2, wobei die Zuleitungen (17) der Spritzdüsen (7) in vertikaler Ausrichtung angebracht sind.

4. Vorrichtung nach Anspruch 2 oder 3, wobei im Zulauf (17) zu einer Düse (7) ein beweglicher Schwebekörper oder Drosselkörper (18) angeordnet ist, der in Abhängigkeit der Wasserströmung seine Lage (19, 19') verändert, und ferner ein Sensor (20) zu deren Detektion und Auswertung vorhanden ist.

5. Vorrichtung nach Anspruch 4, wobei jeder Spritzdüsenposition ein Schwebe- oder Drosselkörper (18) mit einem Sensor (20) zur Lageerkennung zugeordnet ist.

6. Vorrichtung nach wenigstens einem der vorhergehenden Ansprüche, wobei die Spritzdüsen durch ein drehendes Spritzrohr (16) gebildet werden,
das mit seiner Längserstreckung im Wesentlichen quer zum Transportpfad der Flaschen ausgerichtet ist, wobei die Flaschen in mehreren parallelen Spuren transportiert werden und jeder Spur wenigstens eine Spritzdüse (7) des Spritzrohres (16) zugordnet ist.

## Claims

1. An apparatus (1) for cleaning bottles (2) comprising a substantially closed housing which includes at least one cleaning basin, in which bottles can be cleaned by an immersion treatment in hot cleaning agent, and spray nozzles (7) for washing off the cleaning agent with colder water, **characterized by** at least one unit for checking the function of at least individual, preferably all, spray nozzles, wherein the unit includes suitable sensors (15) which, when a spray nozzle is actuated, generate a fluid flow in the flow direction downstream of the outlet opening of a spray nozzle, wherein the apparatus includes conveying means for bottles and the sensors of the unit are arranged in the region of the spray nozzles, wherein the conveying means include cells (13) or similar means for holding individual bottles, wherein the bottles are arranged in an overhead position in the cells in the region of the spray nozzles and at least one sensor is positioned above an associated cell in the transport path of a bottle so that it is able to detect a spray jet, and wherein the sensors of the unit are arranged above the conveying means on a common rail (14).

2. The apparatus according to claim 1, wherein furthermore sensors (20) are arranged in the spray nozzles (7) or upstream thereof in the flow direction.

3. The apparatus according to claim 2, wherein the feed lines (17) of the spray nozzles (7) are installed in vertical alignment.

4. The apparatus according to claims 2 or 3, wherein a movable float or throttle body (18) is arranged in the inlet (17) to a nozzle (7), wherein it changes its position (19, 19A) as a function of the water flow, and furthermore a sensor (20) is provided for detecting and evaluating the same.

5. The apparatus according to claim 4, wherein a floating or throttle body (18) including a sensor (20) for position detection is assigned to each spray nozzle position.

6. The apparatus according to at least one of the preceding claims, wherein the spray nozzles are formed by a rotating spray tube (16) which is aligned with its longitudinal extension substantially transverse to the transport path of the bottles, wherein the bottles are transported in a plurality of parallel tracks and at least one spray nozzle (7) of the spray tube (16) is assigned to each track.

## Revendications

1. Dispositif (1) pour le nettoyage de bouteilles (2), comprenant un boîtier essentiellement fermé présentant au moins un bac de nettoyage au sein duquel des bouteilles peuvent être nettoyées dans un produit de nettoyage chaud grâce à un traitement par immersion, et des buses de pulvérisation (7) avec lesquelles le produit de nettoyage peut être pulvérisé avec de l'eau plus froide, **caractérisé par** au moins une unité permettant de vérifier le fonctionnement d'au moins une seule, de manière préférée de la totalité, des buses de pulvérisation, dans lequel l'unité présente des capteurs (15) appropriés qui, lors de l'actionnement d'une buse de pulvérisation, peuvent détecter un flux de fluide à l'arrière de l'orifice de sortie d'une buse de pulvérisation dans une direction d'écoulement, dans lequel le dispositif présente un dispositif de transport destiné à des bouteilles et les capteurs de l'unité sont agencés dans la région des buses de pulvérisation, dans lequel le dispositif de transport présente des cellules (13) ou des moyens de retenue similaires permettant d'accueillir des bouteilles individuelles, dans lequel les bouteilles sont agencées dans les cellules dans une position aérienne dans la région des buses de pulvérisation et au moins un capteur est positionné au-dessus d'une cellule associée sur le trajet de transport d'une bouteille de manière à pouvoir détecter un jet de pulvérisation, et dans lequel les capteurs de l'unité sont agencés au-dessus du dispositif de transport sur un bandeau commun (14).

2. Dispositif selon la revendication 1, dans lequel des capteurs (20) sont en outre agencés dans les buses de pulvérisation (7) ou en amont dans la direction d'écoulement.

3. Dispositif selon la revendication 2, dans lequel les conduites d'alimentation (17) des buses de pulvérisation (7) sont mises en place avec une orientation verticale.

4. Dispositif selon la revendication 2 ou 3, dans lequel un corps en suspension ou un corps d'étranglement (18) mobile qui modifie sa position (19, 19') en fonction du débit d'eau est agencé dans l'alimentation (17) menant à une buse (7), et dans lequel un capteur (20) permettant la détection et l'évaluation dudit corps est également présent.

5. Dispositif selon la revendication 4, dans lequel un corps en suspension ou d'étranglement (18) avec un capteur (20) permettant une détection de position est associé à chaque position de buse d'injection.

6. Dispositif selon au moins l'une quelconque des revendications précédentes, dans lequel les buses de pulvérisation sont formées d'un tube de pulvérisation (16) rotatif dont l'extension longitudinale est orientée de manière essentiellement transversale par rapport au trajet de transport des bouteilles, dans lequel les bouteilles sont transportées au sein de plusieurs voies parallèles et au moins une buse de pulvérisation (7) du tube de pulvérisation (16) est associée à chaque voie.
